# EUROPEAN PATENT APPLICATION

(11) **EP 4 296 246 A1**
(43) Date of publication of application: **27.12.2023**
(21) Application number: 22755892.1
(22) Date of filing: 28.01.2022
(51) Int. Cl.: C04B 35/5835, B23B 27/14, B23B 27/20, B28D 1/14, C04B 35/5831, E21B 10/46

(54) **CBN SINTERED BODY**

(30) Priority: 20.02.2021 JP 2021025752
(71) Applicant: Mitsubishi Materials Corporation, Tokyo 100-8117 (JP)
(72) Inventor: KOSHIYAMA, Masayuki, Naka-shi, Ibaraki 311-0102 (JP); YANO, Masahiro, Naka-shi, Ibaraki 311-0102 (JP)
(74) Representative: Gille Hrabal Partnerschaftsgesellschaft mbB Patentanwälte
(86) International application number: PCT/JP2022/003315
(87) International publication number: WO 2022/176569

(57) **Abstract**

A cBN sintered compact in accordance with an embodiment of the present invention comprises:
cBN grains and a binder phase; wherein
the content of the cBN grains is 40 vol% or more and 80 vol% or less;
the binder phase comprises titanium boride grains;
the compact satisfies the following relation: 3.0 ≤ X/Y ≤ 10.0, where
Y is the sum of the lengths of envelopes on which the cBN grains are in contact with the binder phase, and
X is the sum of the interfacial lengths of the titanium boride grains that are present within 2 µm from the surfaces of each cBN grain and have an oblateness of 1.3 or more and 30.0 or less where the oblateness is defined by L²/(4πS), where L is the interfacial length and S is the area of the titanium boride grain.

## Description

### Technical Field

The present invention relates to a cubic boron nitride sintered compact (hereinafter may be referred to as cBN sintered compact), which is a hard composite material. This application claims the priority benefit of Japanese Patent Application No. 2021-25752 filed on February 20, 2021. The entire contents described in the Japanese patent application are thereby incorporated by reference herein.

### Background Art

cBN sintered compacts, which are inferior in hardness to diamond, have been used in cutting tools because of low reactivity with Fe-based and Ni-based materials, and have been used in drilling tips for drilling tools of iron ore and nickel ore in mines, in addition to cutting tools. Several proposals have been made to improve the performance of the cBN sintered compact.

For example, Patent Literature 1 discloses a cBN sintered compact including a hard grain layer; a first layer on the surface of the hard grain layer, the first layer containing at least one compound selected from the group consisting of Ti-containing boronitride, borocarbide, boroxide, boronitroxide, boronitrocarbide, borocarborate, and boronitrocarbonate; a second layer on the entire surface of the first layer, the second layer containing at least one compound selected from the group consisting of Al-containing boronitride, borocarbide, boroxide, boronitroxide, boronitrocarbide, borocarborate, and boronitrocarbonate. Cutting tools including such a sintered compact exhibits high fracture resistance in use.

Patent Literature 2 discloses a cBN sintered compact that comprises 45 to 75% by volume of cubic boron nitride grains with an average size of 0.5 to 3.5 µm and a binder phase containing titanium boride grains with an average size of 50 to 500 nm dispersed therein, wherein the expression holds: (-0.05X+4.5) ≤ Y ≤ (-0.2X+18) between the content X (% by volume) of the cubic boron nitride grains and the content Y (% by volume) of the formed titanium boride grains, and the proportion of the titanium boride grains not in contact with the cubic boron nitride grains is 15 to 65% by volume of all the titanium boride grains. Cutting tools including such a sintered compact exhibits high fracture resistance in use.

Patent Literature 3 discloses a cBN sintered compact including a binding phase that contains titanium boride grains having an average grain size of 10 to 200 nm, the content being 0.2 to 10 vol%, wherein the ratio (PN_{TB}/PN_{BN}) of the number PN_{TB} of cBN grains in contact with titanium boride having a major axis of 150 nm or more to the total number PN_{BN} is 0.05 or less. Cutting tools including such a sintered compact exhibits high wear resistance and fracture resistance in use.

### Citation list

### Patent Literature

[PTL 1] Japanese Unexamined Patent Application Publication No. Hei5-310474
[PTL 2] Japanese Patent No. 5804448
[PTL 3] Japanese Unexamined Patent Application Publication No.2018-145020

### Summary of Invention

### Technical Problem

An object of the present invention, which has been made in view of the above-described circumstances and proposals, is to provide a cBN sintered compact that has excellent fatigue wear resistance and abrasive wear resistance, and further has resistance to damage, such as fracture due to impacts and vibrations for breaking rocks even in use in a drilling tool.

### Solution to Problem

A cBN sintered compact in accordance with an embodiment of the present invention comprises:
cBN grains and a binder phase; wherein
the content of the cBN grains is 40 vol% or more and 80 vol% or less;
the binder phase comprises titanium boride grains;
the compact satisfies the following relation: 3.0 ≤ X/Y ≤ 10.0, where
Y is the sum of the lengths of envelopes on which the cBN grains are in contact with the binder phase, and
X is the sum of the interfacial lengths of the titanium boride grains that are present within 2 µm from the surfaces of each cBN grain and have an oblateness of 1.3 or more and 30.0 or less where the oblateness is defined by L²/(4πS), where L is the interfacial length and S is the area of the titanium boride grain.

### Advantageous Effect

The cBN sintered compact has excellent fatigue wear resistance, abrasive wear resistance and high toughness, and further has resistance to damage, such as fracture due to impacts and vibrations for breaking rocks even in use in a drilling tool.

### Brief Description of Drawings

FIG. 1 is a schematic illustration of cBN grains surrounded by titanium boride grains in a cBN sintered compact in accordance with an embodiment of the present invention.
FIG. 2 is a schematic illustration of the envelope length of one cBN grain in accordance with an embodiment of the present invention.

### Description of Embodiment

The present inventors have recognized that these cBN sintered compacts disclosed in the above-mentioned patents have been mainly proposed as cutting tools for use by being pressed against a work material of homogeneous composition, in other words, the compact as a material for cutting tools has an improved resistance to the main damage due to frictional wear with the contact portions with a work material and chip.

In contrast, drilling tools are tools for digging into the ground or rock. In this situation, rocks in the ground are non-uniformity in composition and strength, and are brittle materials. Unlike cutting tools focusing on cutting and chipping off performance, drilling tools must withstand the impacts and vibrations to break the rock, as well as the rotation caused by the excavator to efficiently remove this broken rock.

In detail, materials for drilling tools are required to have resistance to fatigue wear due to repeated impacts and abrasive wear due to minute cutting action occurring if the hard components of rocks enter gaps between the cutting edge of the tool and the rock in an environment of crushed rock surrounding the drilling tool. The materials are further required to have resistance to damage such as fracture due to impacts and vibrations for breaking rocks.

To this end the present inventors have conducted extensive studies to find a cBN sintered compact that has excellent fatigue wear resistance and abrasive wear resistance, and further has resistance to damage, such as fracture due to impacts and vibrations for breaking rocks even in use in a drilling tool based on such recognition.

As a result, in the case that titanium boride crystal grains contained in the binder phase and having elongated platy shapes (the degree of plate-likeness is expressed by the oblateness described later) are present in a specific form near the cBN grains, the inventors found the following results:
(1) Titanium boride crystal grains causes propagation of cracking to detour near the interfaces between the cBN grains and the binder phase;
(2) The detouring in result (1) reduces the detachment of cBN grains on the surface of the cBN sintered compact, and improves the fracture resistance inside the cBN sintered compact; and
(3) Result (2) is found in both titanium boride crystal grains lying in an isolated state and in a tangled state.

The following detailed description will focus on application of the cBN compact in accordance with embodiments of the present invention to drilling tools.

The expression "A to B" or "A-B" (A and B are both numerical values) on the numerical range throughout the specification and claims is synonymous with "A or above and B or below", and the range includes the upper limit value (B) and the lower limit value (A). In the case that only the upper limit (B) is followed by a unit, the unit for the upper limit (B) should also be applied to the lower limit (A).

These values include experimental errors.

### 1. Cubic boron nitride (cBN) grains

The average size of cBN grains and the content of cBN grains in the cBN sintered compact will now be described.

### (1) Average grain size

The cBN grains used in this embodiment may have any average grain size. The preferred average grain size ranges from 0.5 to 30.0 µm.

The reason for limiting the range of the average grain size is as follows: In addition to an improvement in fracture resistance by hard cBN grains contained in the sintered compact, an average grain diameter of 0.5 to 30.0 µm leads to, for example, not only decreases in breakage and chipping originating from the uneven shape of the cutting edge caused by detachment of cBN grains from the surface of a drilling tool during use, but also decreases in cracks propagating from the interface between the cBN grains and the binder phase by stresses applied to the cutting edge of the drilling tool during use or decreases in propagation of cracking of the cBN grains. More preferably, the average grain seize is 1.0 µm or more and 25.0 µm or less.

The average diameter of cBN grains can be determined as follows:
The cross section of a sintered cBN is mirror-finished, and the microstructure on the mirror-finished surface is observed by scanning electron microscopy (SEM) to capture a secondary electron image. A portion of cBN grains in the captured image is extracted by image processing, and the average grain diameter (described below) is calculated based on the maximum length of each grain determined by image analysis.

The extraction of the portions of cBN grains in the image by the image processing comprises the steps of: displaying the image in monochrome of 256 gradations including 0 in black and 255 in white to clearly distinguish the cBN grains from the binder phase; and binarizing the image using a threshold calculated with an expression (w-v)/2+v where v represents the peak pixel value of each portion of cBN grains and w represents the peak pixel value of each portion of the binder phases.

It is preferable to determine pixel values of at least three different cBN grains within the same image area and to define the average of the three pixel values as the peak pixel value of the cBN grain. The region for determining the pixel values of each cBN grain has dimensions of, for example, about 0.5 µm by 0.5 µm. It is preferable to determine pixel values of at least three different binder phases within the same image area and to define the average of the three pixel values as the peak value of the binder phase. The region for determining the pixel values of each binder phase has dimensions of about 0.2 µm by 0.2 µm to 0.5 µm by 0.5 µm.

After the binarization process, the cBN grains are separated from each other by a process that separates the contact portions of the cBN grains, for example, by watershed analysis.

The black portions corresponding to cBN grains in the image after the binarization process are subjected to grain analysis, and the maximum length of each cBN grain is defined as a diameter of the grain. For grain analysis to determine the maximum length, a larger one of the two lengths obtained by calculating the Feret diameter of one cBN grain is a maximum length, and this value is defined as a diameter of each cBN grain.

Each cBN grain is then assumed to be an ideal sphere with this diameter, to calculate the cumulative volume as a volume of the grain. Based on this cumulative volume, a graph is drawn with the vertical axis as volume percentage (%) and the horizontal axis as diameter (µm). The diameter at 50% volume fraction corresponds to the average diameter of cBN grains. This treatment is performed for three observation areas, and the average thereof is defined as an average grain diameter D50 of cBN (µm).

Prior to the grain analysis, a length (µm) per pixel is preliminarily determined with a standard scale in a SEM image. Preferably, at least 30 cBN grains are observed in an observation area. For example, in the case that the average size of the cBN grains is about 3 µm, the observation area is preferably about 15 µm by 15 µm.

### (2) Content

The cBN compact may contain any amount (% by volume) of cBN grains. A preferred content ranges is 40 vol% or more and 80 vol% or less for the following reasons.

A content below 40% by volume leads to a reduced amount of hard material (cBN grains) in the cBN sintered compact, which may result in reduced fracture resistance in use, for example, as a drilling tool. A content above 80% by volume leads to formation of voids in the cBN sintered compact, which voids may work as origins of cracks and thus may result in reduced fracture resistance. The content of cBN grains is more preferably 65 vol % or more and 78 vol % or less.

The content of the cBN grains in the cBN sintered compact can be determined as follows: A cross-sectional microstructure of the cBN sintered compact is observed by SEM, the portions of cBN grains in the observed secondary electron image are extracted by image processing, and then the area occupied by the cBN grains is calculated by image analysis. This procedure is repeated in at least three observation areas, and the average of the resulting areas is defined as a cBN grain content (% by volume). It is preferred that at least 30 cBN grains are observed in an observation area. For example, in the case that the average size of the cBN grains is about 3 µm, the observation area is preferably about 15 µm by 15 µm.

### 2. Binder Phase

Preferably, the binder phase in accordance with the present embodiment contains titanium boride or TiB₂ grains.

Throughout the description and claims, titanium boride grains are each defined by an overlapping area of mapping images of the titanium element and the boron element observed by Auger electron spectroscopy (AES) of a mirror-finished cross-section of a cBN sintered compact. One overlapping area may have any area, preferably an area of 0.01 µm² or more and 5.00 µm² or less.

An overlapping area of less than 0.01 µm² lead to insufficient strength of the titanium boride grains, resulting in impairing the formation of detour of cracking. An overlapping area exceeding 5.00 µm² lead to formation of a point of origin of fatigue failure caused by impact during excavation.

In preferred embodiments, the magnification of the observation is about 20,000 times, the area of the observation includes cBN grains each having an envelope that is in contact with the binder phase, the sum of the lengths of envelopes is 3 µm or more, and the area further includes a region 2 µm distant from the surface of the cBN grain. Accordingly, observation of at least three fields of view each having an observation area of about 3.5 µm by 4.5 µm is preferred. Although these fields may include partial cBN and titanium boride grains, but the Interface between the grain and the frame of an observation area are excluded from the calculation of X and Y. Overlapping titanium boride grains are regarded as a single grain.

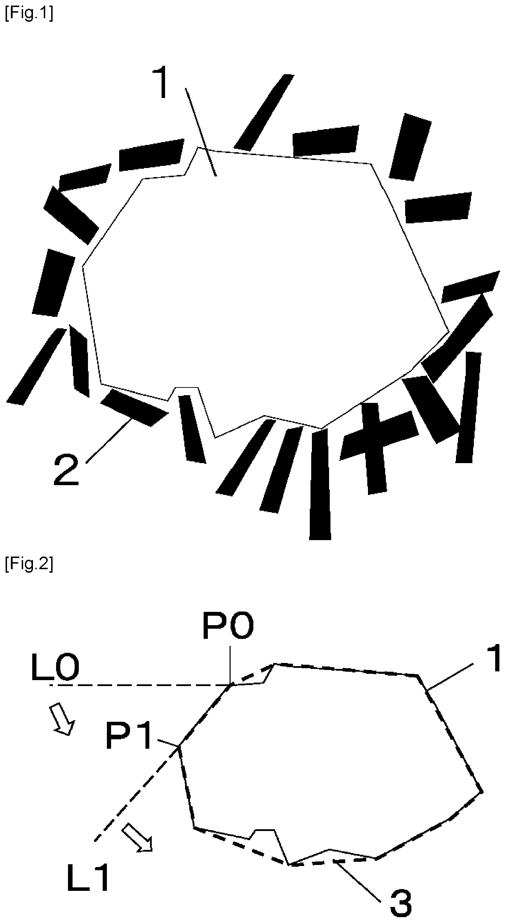

With reference to the schematic illustration of FIG. 1, titanium boride grains preferably lie around a cBN grain.

Specifically, it is preferred that the following relation holds:
3.0 ≤ X/Y ≤ 10.0 where Y is the sum of the lengths of envelopes on which the cBN grains are in contact with the binder phase, and X is the sum of the interfacial lengths of the titanium boride grains that are present within 2 µm from the surface of each cBN grain and has an oblateness of 1.3 or more and 30.0 or less.

The length of the envelope of each cBN grain is defined by a closed dotted line in Fig. 2, i.e., the sum of the lengths of the partial lines connecting the convexities of the surface of the cBN grain. Y is the sum of the lengths of the envelopes of the cBN grains in the area of observation, each of which is in contact with the binder phase. If two cBN grains overlap with each other, for example, the images of these grains are separated by the watershed image processing described above, the sum of tentative interfacial lengths of individual cBN grains are determined, and then the lengths of the envelops of the cBN grains in the overlapping area are subtracted from the sum of the tentative lengths. Y of the overlapping grains is thereby determined. The same process can be applied to three or more overlapping grains.

The envelope of each grain is determined as follows:
1) Select a cross-sectional observation area of 3.5 µm by 4.5 µm (magnification of observation is 20,000).
2) Translate a straight line perpendicular to a diagonal from the upper left corner to the lower right corner of the rectangular area of observation toward the cBN grain in the area, and define a point at which the straight line first comes into contact with the surface of the grain as P0.
3) Draw a horizontal line segment L0 from point P0 outward of the cBN grain, and rotate the line segment L0 counterclockwise around P0 until the line segment L0 comes into contact with the surface of the cBN grain. The point of contact is defined as P1.
4) Draw a line segment L1 from point P0 via point P1 and extending outward of the cBN grain, and rotate the line segment L1 rotated counterclockwise around P1 until the line segment L1 comes into contact with the surface of the cBN grain. The length from point P0 and P1 is defined by I1, and the point of contact is defined as P2.
5) Repeat procedure 4) until Pn (n ≥ 3) matches P0.
6) The length of the envelope is defined by the sum of lengths l1+l2+...+ln.

The reason for using the length of the envelope is as follows: Since titanium boride grains are generated from the boron element of the cBN grains, the surfaces of the cBN grains often become non-uniformity during formation of platy titanium boride grains. If the unevenness of the cBN grains reflects the interfacial length between the cBN grains and the binder phase, Y will be overestimated, and thus the ratio X/Y will be underestimated, resulting in underestimation of the functions of titanium boride. Accordingly, the inventors determined to use the length of the envelope Y, which does not depend on the unevenness of the cBN grains.

The perimeter of titanium boride grains refers to the length of the periphery of the titanium boride grain, that is, the peripheral length L along the surface of the titanium boride grain. X represents the sum of all peripheral lengths (L) of titanium boride grains with an oblateness of 1.3 or more and 30.0 or less present within 2 µm around the surface of a cBN grain in the observation area.

The reason why the above range is preferable for the ratio X/Y is as follows: A ratio X/Y is less than 3.0 leads to a small number of titanium boride grains relative to a cBN grain, which impairs detouring of cracks and lessens the adhesive force between cBN grains and the binder phase. A ratio X/Y exceeding 10.0 leads to an excess number of titanium boride grains, which readily function as origins of cracks. In more preferred embodiment, the ratio X/Y is 4.0 or more and 7.0 or less.

The oblateness is represented by L²/(4πS), where L is the perimeter of each titanium boride grain, and S is the area of the titanium boride grain. The oblateness defines the shape of the titanium boride grain. The titanium boride grains preferably have an oblateness of 1.3 or more and 30.0 or less.

The reason why the oblateness is preferably 1.3 or more and 30.0 or less is as follows: As the shape of the grain is closer to a circle, the oblateness approaches 1 and the grain having a shape of a perfect circle has an oblateness of 1. An oblateness of less than 1.3 of titanium boride, the grain has a shape closer to a circle, which precludes detouring of cracks. An oblateness exceeding 30.0 causes long thin titanium boride grains to be formed, which grains have low strength, does not prevent propagation of cracks, and thus do not contribute to improving fracture resistance. The oblateness is more preferably 1.5 or more and 25.0 or less.

The phrase "titanium boride grains lying within 2 µm from the surface of the cBN grains" indicates that parts of titanium boride grains are present within a circle with a radius of 2 µm centered on any starting point on the interface between the cBN grain and the binder phase. In this case, the parts of the grains may be within the circle, in other words, may be in point contact, or the titanium boride grains may be in contact with the cBN grains.

The reason why titanium boride grains should lie within 2 µm from the surface of the cBN grain is as follows: A distance exceeding 2 µm from the cBN grain causes cracks not to propagate to titanium boride grains but to reach the cBN grain directly. As a result, the cBN grain is readily detached accompanied with propagation of cracks on the surface of the sintered compact while cracks propagate on the interface of the cBN grains in the interior of the sintered compact, resulting in a decrease in fracture resistance of the cBN sintered compact. More preferably, the titanium boride grains are present within 1 µm from the surface of the cBN grains.

The above description includes the features appended below.

### (Appendix 1)

A cBN sintered compact in accordance with an embodiment of the present invention comprises:
cBN grains and a binder phase; wherein
the content of the cBN grains is 40 vol% or more and 80 vol% or less;
the binder phase comprises titanium boride grains;
the compact satisfies the following relation: 3.0 ≤ X/Y ≤ 10.0, where
Y is the sum of the lengths of envelopes on which the cBN grains are in contact with the binder phase, and
X is the sum of the interfacial lengths of the titanium boride grains that are present within 2 µm from the surfaces of each cBN grain and have an oblateness of 1.3 or more and 30.0 or less where the oblateness is defined by L²/(4πS), where L is the interfacial length and S is the area of the titanium boride grain.

### (Appendix 2)

The cBN sintered compact as described in Appendix 1, wherein the average diameter of the cBN grains is 0.5 µm or more and 30.0 µm or less.

### (Appendix 3)

The cBN sintered compact as described in Appendix 1 or Appendix 2, wherein the content of the cBN grains is 65 vol% or more and 78 vol% or less.

### (Appendix 4)

The cBN sintered compact as described in any one of Appendices 1 to 3, wherein the oblateness is 1.5 or more and 25.0 or less.

### (Appendix 5)

The cBN sintered compact as described in any one of Appendices 1 to 4, wherein the titanium boride grains lie within 1 µm from the surface of each of the cBN grains.

### (Appendix 6)

The cBN sintered compact as described in any one of Appendices 1 to 5, wherein the ratio X/Y is 4.0 ≤ X/Y ≤ 7.0.

### (Appendix 7)

The cBN sintered compact described in any one of Appendices 1 to 6, wherein the area of the titanium boride grains is 0.01 µm² or more and 5.00 µm² or less.

### Examples

Examples of the present invention will now be described. The present invention should not be construed to limit to tools for drilling rocks.

The sintered compacts of examples were each produced by the following processes (1) through (3). The raw powder contained trace amounts of incidental impurities.

### (1) Preparation of Raw Material Powder

Raw material powders were prepared for forming hard cBN grains with an average diameter of 0.5 to 30.0 µm after sintering as shown in Table 2, and three Ti₂AlC raw material powders having an average particle diameter of 5 µm, 10 µm, and 50 µm, respectively, and Ti₃AlC₂ raw material powder having an average particle diameter of 50 µm were prepared for forming a binder phase. The average particle diameter of each raw material powder was defined by a particle diameter D50 at a cumulative frequency of 50% in a particle size distribution curve, which consists of the frequency [%] of the particle diameter.

TiCN and TiAl₃ powders were also prepared as raw materials of the binder phase. The average particle diameter of each powder was 0.6 µm. The formulation of these raw materials is shown in Table 1.

### (2) Mixing and preliminary Heat Treatment

These powders were placed and mixed together with cemented carbide balls and acetone in a ball mill vessel lined with cemented carbide. The mixing time was 1 hour to avoid finely grinding the raw powder. Although not performed in this example, it is more preferable to use an ultrasonic agitation device to disintegrate the agglomeration of the raw material powders during mixing.

The powder mixture was preliminarily heat-treated at 600°C under a vacuum atmosphere of 1 Pa or less to evaporate adsorbed water from the powder surface.

The temperature for preliminary heat treatment should be 250 to 900°C under a vacuum atmosphere of 1 Pa or less, which is included in the treatment conditions of this example, for the following reason: A temperature of less than 250°C leads to insufficient evaporation of adsorbed water and causes Ti₂AlC and Ti₃AlC₂ to react with remaining moisture during ultrahigh-pressure high-temperature sintering to decompose into TiO₂ and Al₂O₃, whereas a temperature exceeding 900°C causes Ti₂AlC and Ti₃AlC₂ to react with oxygen during preliminary heat treatment to decompose into TiO₂ and Al₂O₃ during preliminary heat treatment. As a result, the contents of Ti₂AlC and Ti₃AlC₂, which are the raw materials constituting the binder phase decrease, resulting in a decrease in toughness of the cBN sintered compact.

### (3) Compaction and Sintering

The resulting raw powder mixture was then compacted to form a green compact, which was then placed into an ultrahigh pressure sintering apparatus and sintered under a pressure of 5 GPa and a temperature of 1200 to 1600°C to produce cBN sintered compacts (Example sintered compacts) 1 to 10 shown in Table 2. The content and average diameter of cBN grains in Table 2 were determined by the method described above. The average grain size and content of cBN grains were measured in an observation area containing at least 30 cBN grains. The other observation fields of view were measured using the example sizes. Identification of titanium boride and calculation of the ratio X/Y were performed by elemental mapping and image analysis using AES as described above. This image analysis was performed on three fields of view with an observation area of 3.5 µm × 4.5 µm. The phases constituting the cBN sintered compact were identified by X-ray diffractometry (XRD)

Comparative sintered compacts were also prepared. Raw material powders were prepared for forming hard cBN grains with an average diameter of 1.5 to 8.8 µm after sintering as shown in Table 4, and two Ti₂AlC raw material powders having an average particle diameter of 5 µm and 50 µm, respectively, TiCN and TiAl₃ raw material powders each having an average particle diameter of 0.6 µm, and Co powder having an average particle diameter of 1 µm were prepared for forming a binder phase. These powders were formulated so as to compositions shown in Tables 3 and 4, and were mixed in a ball mill as in Examples. The mixture was preliminarily heat-treated at a temperature of 600°C and then compacted to produce a green compact, which was then placed into an ultra-high pressure sintering apparatus, and sintered at a pressure of 5 GPa and a temperature of 1300 to 1700°C. Comparative Example cBN sintered compacts (referred to as Comparative Example sintered compacts) 1 to 4 shown in Table 4 were thereby produced. Each value in Table 4 was determined in the same manner as in Examples.

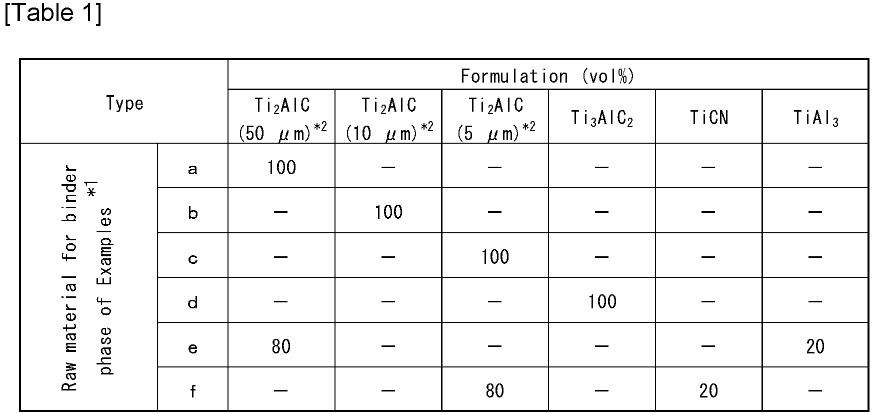

In Table 1, "-" indicates that the powder is not compounded, "*1" indicates that a part of the powder was also used as a raw material for the binder phase in Comparative Examples, and "*2" indicates the average particle size.

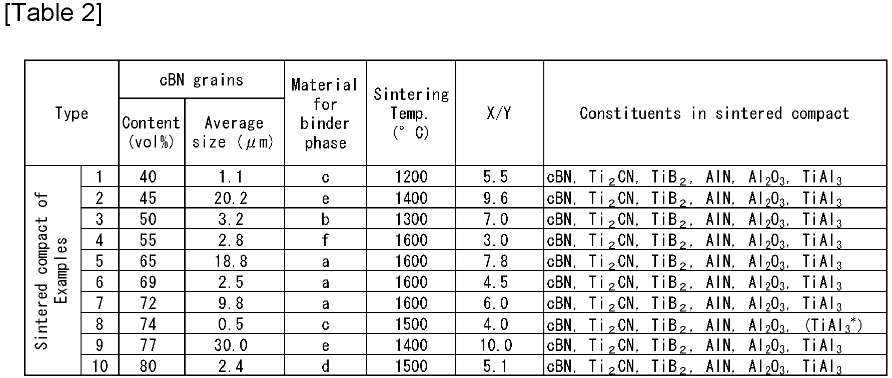

In Table 2, "*" indicates that the constituent was identified by AES.

**[Table 3]**

| Type | | Formulation (vol%) | | | |
|---|---|---|---|---|---|
| | | Ti₂AlC (50 *µ*m)* | TiCN | TiAl₃ | Co |
| Raw material for binder phase of Comparative Examples | g | 50 | - | 50 | - |
| | h | - | 60 | 40 | - |
| | i | - | 70 | 10 | 20 |

In Table 3, "-" indicates that the powder is not compounded, and "*" indicates the average particle size.

**[Table 4]**

| Type | | cBN grains | | Material for binder phase | Sintering Temp. (° C) | X/Y | Constituents in sintered compact |
|---|---|---|---|---|---|---|---|
| | | Content (vol%) | Average size (*µ*m) | | | | |
| Sintered compact of Comparative Examples | 1 | 20 | 3.1 | c | 1400 | 5.0 | cBN, Ti₂CN, TiB₂, AlN, Al₂O₃. TiAl₃ |
| | 2 | 48 | 3.3 | h | 1700 | 0.8 | cBN, Ti₂CN, TiB₂, AlN, Al₂O₃ |
| | 3 | 66 | 8.8 | g | 1300 | 13.5 | cBN, Ti₂CN, TiB₂, AlN, Al₂O₃, TiAl₃ |
| | 4 | 91 | 1.5 | i | 1600 | 0.3 | cBN, Ti₂CN, TiB₂, Co₂B, Al₂O₃, AlN |

Sintered Compacts 1 to 10 of the present invention and Sintered Compacts 1 to 4 of Comparative Examples were each shaped into Example Tools 1 to 10 (referred to as Examples 1 to 10) and Comparative Example Tools 1 to 4 (referred to as Comparative Examples 1 to 4), each having a shape of ISO RNGN090300, respectively, were prepared, mounted on an NC lathe, and subjected to the following wet cutting test.

Cutting speed: 150 m/min
Cutting depth: 0.3mm
Feed rate: 0.1 mm/rev
Work material: Granite (produced in Takine), shape 150 mm in diameter by 200 mm in length
Cutting oil: Water-soluble cutting oil (NEOCOOL manufactured by MORESCO Co., Ltd.)

The amount of wear and the state (fracture) of the cutting edge were observed after the cutting length (cutting distance) reached 800 m, with proviso that the cutting edge was observed every 100 m of cutting length. The cutting test was stopped if the amount of wear exceeded 2000 µm. Table 5 shows the results.

**[Table 5]**

| Type | Amount of wear (state of edge) | Type | Amount of wear (state of edge) |
|---|---|---|---|
| Example 1 | 2010 *µ*m (chipping not found) | Comparative Example 1 | Unavai lab le (fracture)* |
| Example 2 | 1880 *µ*m (chipping found) | Comparative Example 2 | Unavai lab le (fracture)* |
| Example 3 | 1750 *µ*m (chipping not found) | Comparative Example 3 | 2340 *µ*m (chipping found)* |
| Example 4 | 1920 *µ*m (chipping found) | Comparative Example 4 | 2260 *µ*m (chipping found)* |
| Example 5 | 1810 *µ*m (chipping not found) | | |
| Example 6 | 1540 *µ*m (chipping not found) | | |
| Example 7 | 1450 *µ*m (chipping not found) | | |
| Example 8 | 1620 *µ*m (chipping not found) | | |
| Example 9 | 1790 *µ*m (chipping not found) | | |
| Example 10 | 1910 *µ*m (chipping found) | | |

In Table 5, "*" indicates the state at a cutting distance of 100 m.

Table 5 evidentially demonstrates that all Examples have a small amount of wear and less chipping, and thus are excellent in abrasive wear resistance and resistant to damage such as fracture caused by impacts and vibrations accompanying breaking rocks even during use as drilling tools. In contrast, all Comparative Examples exhibit the damage progresses at an early stage, and thus occurrence of fracture and a large amount of wear at a small cutting length, indicating that these cannot be used in drilling tools.

The disclosed embodiments are merely illustrative in all respects and are not restrictive. The scope of the present invention is indicated by claims rather than the above-described embodiments, and is intended to include all modifications within the meaning and scope equivalent to the scope of the claims.

### [Reference Signs list]

1 cBN grains
2 titanium boride grains
3 enclosure interface

## Claims

1. A cBN sintered compact in accordance with an embodiment of the present invention comprising:
cBN grains and a binder phase; wherein
the content of the cBN grains is 40 vol% or more and 80 vol% or less;
the binder phase comprises titanium boride grains;
the compact satisfies the following relation: 3.0 ≤ X/Y ≤ 10.0, where
Y is the sum of the lengths of envelopes on which the cBN grains are in contact with the binder phase, and
X is the sum of the interfacial lengths of the titanium boride grains that are present within 2 µm from the surfaces of each cBN grain and have an oblateness of 1.3 or more and 30.0 or less where the oblateness is defined by L²/(4πS), where L is the interfacial length and S is the area of the titanium boride grain.
